(19) **Europäisches Patentamt**

**European Patent Office**

**Office européen des brevets**

(11) Numéro de publication : **0 143 820**
**B1**

(12) FASCICULE DE BREVET EUROPÉEN

(45) Date de publication du fascicule du brevet :
25.03.87

(51) Int. Cl.⁴ : **F 16 H    1/22**

(21) Numéro de dépôt : **84902016.9**

(22) Date de dépôt : **15.05.84**

(86) Numéro de dépôt international :
**PCT/FR 84/00131**

(87) Numéro de publication internationale :
**WO/8404570 (22.11.84 Gazette 84/27)**

(54) TRANSMISSION A ENGRENAGE COMPORTANT DEUX VIS SANS FIN.

(30) Priorité : **16.05.83 FR 8308056**

(43) Date de publication de la demande :
**12.06.85 Bulletin 85/24**

(45) Mention de la délivrance du brevet :
**25.03.87 Bulletin 87/13**

(84) Etats contractants désignés :
**DE GB SE**

(56) Documents cités :
**DE-C-    18 932**
**DE-C-    275 399**
**FR-A- 2 372 998**
**FR-A- 2 521 671**
**GB-A-      2 067**
**GB-A-    140 223**
**US-A- 1 551 474**

(73) Titulaire : **GUICHARD, Roland**
**F-10210 Chaource (Aube) (FR)**

(72) Inventeur : **GUICHARD, Roland**
**F-10210 Chaource (Aube) (FR)**

(74) Mandataire : **Chevallier, Robert Marie Georges**
**Cabinet BOETTCHER 23, rue La Boétie**
**F-75008 Paris (FR)**

Jouve, 18, rue St-Denis, 75001 Paris, France

**Description**

La présente invention a trait à une transmission à engrenages ayant un rendement particulièrement élevé, ladite transmission pouvant, notamment, constituer un réducteur susceptible d'être utilisé, par exemple, pour l'entraînement d'accessoires de véhicules automobiles.

Les caractéristiques du préambule de la revendication 1 sont connues par le document FR-A-2 521 671 dans lequel une figure 1 montre un arbre menant à deux vis sans fin à pas opposés, deux pignons engrenant chacun respectivement avec l'une des vis sans fin et montés chacun sur un arbre portant un pignon intermédiaire ; ces deux pignons intermédiaires engrènent avec une même roue dentée de sortie calée sur un arbre mené.

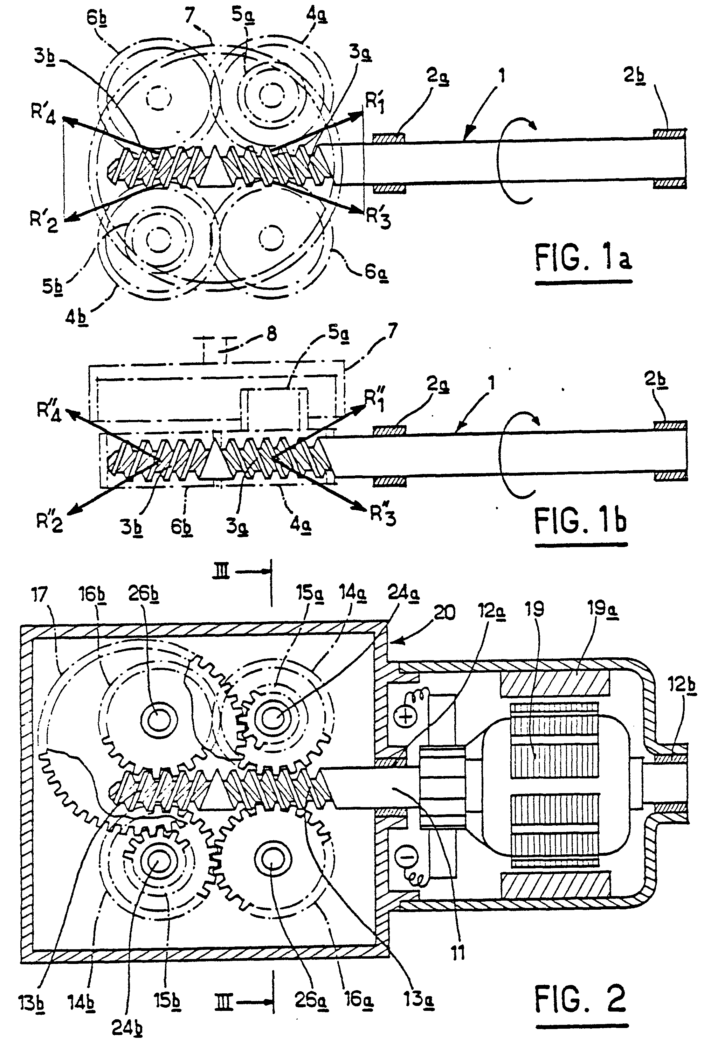

Ce même document comprend une figure 2 qui montre une duplication du montage décrit ci-dessus. A partir d'un arbre menant à deux vis sans fin à pas opposés, deux côtés opposés de ces vis sont utilisés pour l'engrènement de deux paires de pignons ; les deux pignons de chaque paire sont montés, comme ci-dessus, sur un arbre portant un pignon intermédiaire et les deux pignons intermédiaires d'une voie cinématique engrènent avec une même roue dentée de sortie calée sur un arbre mené. Il existe donc deux voies cinématiques distinctes qui aboutissent séparément à deux arbres de sortie distincts. Comme ces deux voies sont distinctes, il ne peut pas y avoir d'auto-équilibrage entre elles:

Un tel dispositif donne parfaitement satisfaction, notamment lorsqu'il est utilisé comme réducteur pour l'entraînement des essuie-glaces d'un véhicule automobile au moyen d'un moteur électrique. Les deux voies cinématiques d'une transmission selon le mode de réalisation préféré ci-dessus défini transmettent par parts égales la puissance fournie à l'arbre mené ; chaque vis de l'arbre mené est soumise à des forces de réaction et, si les pas des vis sont égaux et opposés, ces réactions sont symétriques par rapport au point central de la double vis : dans un plan passant par l'axe de la double vis et perpendiculaire aux axes des deux pignons intermédiaires, les composantes des réactions sont égales, opposées et colinéaires et, par conséquent, elles s'annulent ; par contre, dans un plan perpendiculaire au plan de projection précédent et passant par l'axe de la double vis, ou perpendiculaire à cet axe, les composantes des réactions sur les deux vis ne s'annulent pas et il en résulte un moment de flexion dans la vis, d'où des réactions dans les paliers-supports de l'arbre porteur de la double vis. L'existence de cette réaction de l'arbre sur les paliers qui le supportent explique que le rendement d'une telle transmission soit de 70 % environ, ce qui était déjà très satisfaisant par rapport aux transmissions de l'art antérieur. Par ailleurs, l'importance des réactions sur les paliers de l'arbre menant est d'autant plus grande que l'inclinaison des filets hélicoïdaux de la double vis est plus élevée ; on a donc été amené, en pratique, à limiter l'inclinaison des filets de la double vis à une valeur voisine de 15° ; or, on sait que le rendement de la transmission entre une vis et une roue tangente est optimum pour des valeurs deux à trois fois plus importantes de l'inclinaison des filets. Cette limitation pratique de l'inclinaison des filets de vis intervenait donc également dans la limitation du rendement d'une telle transmission.

La présente invention a pour but de décrire une transmission d'engrenage du type ci-dessus mentionné, ladite transmission ayant un rendement amélioré de façon significative. Cette amélioration du rendement est obtenue en réduisant ou en supprimant complètement les couples produits par les réactions encaissées par les deux vis de la transmission, d'où il résulte une réduction considérable ou une disparition des réactions de l'arbre porteur de vis sur ses paliers. Pour une même transmission de puissance, on peut donc réduire le dimensionnement de la double vis et adopter des paliers plus faibles pour le support de l'arbre qui porte la double vis. On voit donc que, pour une même puissance transmise, on pourra réduire le poids et le coût de la transmission par rapport à une transmission du type de celle décrite dans le brevet français 2 372 998. Par ailleurs, la disparition des réactions sur les paliers permet d'envisager une augmentation de l'inclinaison des filets de vis, ce qui concourt à l'augmentation du rendement final de la transmission.

Selon l'invention, comme décrit dans la revendication 1 on a imaginé de dédoubler chacune des deux voies cinématiques de la transmission du mode de réalisation préféré de l'art antérieur tel que ci-dessus rappelé ; chaque voie cinématique comporte, alors, un pignon intermédiaire lié à une roue intermédiaire, qui engrène avec la roue de sortie, et un pignon auxiliaire, qui engrène avec le pignon intermédiaire précité et avec celle des deux vis qui ne coopère pas avec ledit pignon intermédiaire. De la sorte, on propose une transmission qui comporte deux vis sans fin, de sens contraires, et quatre pignons. Dans chaque voie cinématique, le pignon intermédiaire coopère avec l'une des vis et le pignon auxiliaire avec l'autre, les pignons intermédiaire et auxiliaire engrènant entre eux. Selon l'invention, on prévoit, en outre, que les deux pignons intermédiaires des deux voies cinématiques sont susceptibles de se déplacer parallèlement à leurs axes de valeurs sensiblement égales et de mêmes sens ; les deux pignons intermédiaires sont donc liés dans leur déplacement et leur plan moyen perpendiculaire à leurs axes peut s'éloigner plus ou moins de l'axe de la double vis tout en lui restant parallèle ; le déplacement transversal des pignons intermédiaires est libre au cours du fonctionnement de la transmission.

L'adoption des deux caractéristiques de l'invention comme ci-dessus indiqué, permet d'obtenir des résultats particulièrement intéressants. En effet, on constate tout d'abord qu'il y a auto-équilibrage des efforts entre les deux voies cinématiques de transmission. Si l'une des voies cinématiques tend à transmettre un effort supérieur à l'autre, il en résulte une augmentation des réactions subies par les pignons intermédiaire et auxiliaire de la voie cinématique la plus chargée, et la composante de la réaction qui s'exerce sur le pignon intermédiaire parallèlement à son axe augmente alors que la même composante correspondant à l'autre pignon intermédiaire diminue corrélativement. Il en résulte un déplacement de l'ensemble des deux pignons intermédiaires parallèlement à leurs axes, dans un sens qui tend à ramener les composantes précitées à des valeurs égales et opposées. Le libre déplacement des deux pignons intermédiaires permet donc, en permanence, d'assurer l'auto-équilibrage des efforts entre les deux voies cinématiques.

Par ailleurs, sachant que les deux voies cinématiques sont également chargées en cours de fonctionnement, on peut examiner le fonctionnement d'une seule des deux voies cinématiques, la position des pignons intermédiaires par rapport à l'axe de l'arbre porteur de vis étant supposée fixe. L'arbre porteur de vis est monté sans butée longitudinale : si la puissance transmise par le pignon auxiliaire n'est pas strictement égale à la puissance transmise par le pignon intermédiaire de la même voie cinématique, il est clair que les composantes longitudinales des réactions s'exerçant sur les deux vis ne seront plus égales et que l'arbre porteur de vis va se déplacer longitudinalement pour ramener l'égalité entre les valeurs des composantes longitudinales opposées des deux réactions. Il apparaît donc qu'il y a un équilibrage automatique de la puissance transmise par le pignon auxiliaire et le pignon intermédiaire d'une même voie cinématique. Etant donné que les deux voies cinématiques sont également chargées grâce à l'auto-équilibrage dû au libre déplacement des pignons intermédiaires, on voit que les deux voies cinématiques donnent à l'équilibre la même position longitudinale de l'arbre porteur de vis.

En d'autres termes, on constate que grâce au libre positionnement longitudinal de l'arbre porteur de vis et au libre positionnement transversal des deux pignons intermédiaires par rapport à la double vis, on assure un auto-équilibrage permettant de transmettre le quart de la puissance par chacun des quatre pignons associés à la double vis. Il en résulte que les quatre réactions s'exerçant sur la double vis ont des valeurs égales. Si l'on fait en sorte que le plan des axes d'un pignon intermédiaire et du pignon auxiliaire qui n'engrène pas avec lui soit perpendiculaire à l'axe de la double vis, la disposition des quatre réactions s'exerçant sur la double vis est telle que leurs composantes, dans les plans passant par l'axe de la double vis et parallèle ou perpendiculaire aux axes des pignons, sont deux à deux égales et opposées ; il en résulte qu'il n'y a plus de moment de flexion à l'intérieur de la double vis et qu'il n'y a plus de réaction sur les paliers de l'arbre porteur de vis. Un tel mécanisme de transmission présente le même rendement quel que soit le sens de rotation de la double vis.

Si, au contraire, le plan des axes d'un pignon intermédiaire et du pignon auxiliaire, qui n'engrène pas avec lui, est légèrement oblique par rapport à l'axe de la double vis, il n'y aura pas compensation exacte des composantes des quatre réactions et il subsistera donc un très léger moment de flexion dans l'arbre et une légère réaction sur les paliers de l'arbre porteur de vis.

Il convient de noter que le montage flottant des deux pignons intermédiaires à déplacements liés permet de bénéficier de plusieurs avantages secondaires.

En premier lieu, si l'on suppose que la roue de sortie est dégagée des deux roues intermédiaires qui l'entraînent, et si l'on suppose fixe l'arbre porteur de vis, le montage de la roue de sortie sur les roues intermédiaires est considérablement facilité par la possibilité de déplacement transversal desdits pignons intermédiaires. Un tel déplacement transversal provoque, en effet, une rotation en sens inverse des deux pignons intermédiaires et des roues intermédiaires, qui leur sont associées, et, pour une certaine valeur du déplacement, il devient possible d'engréner la roue de sortie avec les deux roues intermédiaires. Il est à noter que la position transversale des pignons auxiliaires est sans influence sur le montage ou le fonctionnement de la transmission. En effet, si l'on provoque un déplacement transversal des deux pignons intermédiaires, alors que les pignons auxiliaires sont fixes, on a un déplacement hélicoïdal relatif du pignon intermédiaire par rapport au pignon auxiliaire, sans aucune autre modification du système. La position des pignons auxiliaires peut donc être fixe par rapport à l'axe de la double vis ; mais rien n'empêche de prévoir que les pignons auxiliaires puissent avoir un déplacement transversal par rapport à l'axe de la double vis en même temps que les pignons intermédiaires, ce qui conduit à envisager le montage des deux pignons intermédiaires et des deux pignons auxiliaires sur un même moyen de déplacement transversal.

En second lieu, le déplacement transversal des pignons intermédiaires par rapport à l'axe de la double vis peut être utilisé pour créer une irréversibilité de la transmission lorsque celle-ci ne fonctionne pas. Si l'on suppose la transmission à l'arrêt et si l'on suppose les deux pignons intermédiaires dans leur position d'équilibre, il est clair que la transmission selon l'invention, compte tenu de son haut rendement, est nécessairement réversible. Or, il est souvent utile de disposer d'une irréversibilité à l'arrêt. La présence d'un moyen de déplacement transversal des pignons intermédiaires dans le dispositif selon l'invention permet de créer une irréversibilité de la transmission. En effet, si l'on déplace le moyen de déplacement transversal des deux pignons intermédiaires, on détruit toutes les conditions de bon fonctionnement de la transmission et on crée les conditions permettant un très mauvais rendement, d'où il résulte pratiquement une irréversibilité de la transmission pour toute action venant de la roue de sortie. Ce déplacement transversal des pignons intermédiaires peut être réalisé manuellement ou par tout moyen mécanique, pneumatique, hydraulique ou électromagnétique approprié. Si l'on supprime l'effort appliqué sur le moyen de déplacement transversal des pignons intermédiaires et si l'on entraîne à nouveau en rotation la double vis, dans ce cas le moyen de déplacement transversal se replace automatiquement dans la position où les réactions sur la double vis s'équilibrent et où le rendement de transmission est optimum.

Il est bien clair que les vis sans fin de l'arbre porteur de vis peuvent être des vis à un ou plusieurs filets. Les pignons qui engrènent avec ces vis sans fin sont des pignons cylindriques à denture hélicoïdale compatibles avec les deux vis. L'un des pignons auxiliaires a une denture hélicoïdale pas à droite, alors que l'autre a une denture hélicoïdale pas à gauche ; de même, l'un des pignons intermédiaires a une denture hélicoïdale pas à droite, alors que l'autre a une denture hélicoïdale pas à gauche. Les roues intermédiaires et la roue de sortie ont, de préférence, des dentures droites, mais ces dentures peuvent néanmoins être très légèrement hélicoïdales, l'angle de l'hélice étant alors très différent des angles adoptés pour les vis et les pignons de la transmission.

La présente invention a donc pour objet le produit industriel nouveau que constitue une transmission à engrenages comportant un arbre menant et un arbre mené, de vitesses angulaires différentes et d'axes sensiblement perpendiculaires, les deux arbres ayant des axes fixes l'un par rapport à l'autre, l'un des arbres portant deux vis sans fin de sens contraires, étant relié à l'autre arbre par deux voies cinématiques d'engrenage différentes et ayant un libre positionnement longitudinal, chacune des deux voies cinématiques comportant un pignon intermédiaire à denture hélicoïdale engrénant sur l'une des deux vis sans fin, les deux pignons intermédiaires ayant leurs axes de part et d'autre de l'arbre porteur des deux vis sans fin et étant solidaires chacun d'une roue intermédiaire d'engrenage de même axe, les deux roues intermédiaires engrénant avec une même roue entraînant l'arbre de transmission, qui ne porte pas les vis sans fin, les axes des pignons intermédiaires étant sensiblement parallèles à l'axe de l'arbre qui ne porte pas les vis sans fin, caractérisée par le fait que chaque voie cinématique est double et comporte, outre le pignon intermédiaire précité, un pignon auxiliaire à denture hélicoïdale engrénant sur celle des deux vis sans fin qui ne coopère pas avec le pignon intermédiaire de la même voie cinématique, ledit pignon auxiliaire engrénant avec le pignon intermédiaire de la même voie cinématique, les deux pignons intermédiaires des deux voies cinématiques étant portés par un moyen de déplacement les laissant libres en cours de fonctionnement de se déplacer parallèlement à leurs axes, tandis que l'arbre portant les deux vis sans fin est monté libre en déplacement en sens longitudinal.

Dans un mode préféré de réalisation, les deux roues intermédiaires et la roue avec laquelle elles engrènent toutes les deux ont une denture droite ; les pas des deux vis sans fin sont égaux et de sens contraires, les rayons des cylindres primitifs des deux pignons intermédiaires étant égaux, de même que ceux des deux roues intermédiaires ; les deux pignons intermédiaires sont reliés entre eux par un moyen susceptible de se déplacer en translation parallèlement aux axes des deux pignons intermédiaires. Dans une première variante, le moyen de liaison des deux pignons intermédiaires est une platine par rapport à laquelle les deux pignons intermédiaires peuvent tourner librement ; dans une deuxième variante, le moyen de liaison des deux pignons intermédiaires est un galet fou en rotation, qui coopère avec un chemin de roulement correspondant pratiqué sur chacun des deux pignons intermédiaires. On peut avantageusement prévoir que le moyen de liaison des deux pignons intermédiaires relie également les deux pignons auxiliaires, qui peuvent alors tourner librement par rapport à ce moyen de liaison.

Dans un premier mode de réalisation, la roue, qui engrène avec les deux roues intermédiaires, a son cylindre primitif tangent extérieurement aux cylindres primitifs des deux roues intermédiaires. Dans un autre mode de réalisation, la roue qui engrène avec les deux roues intermédiaires a son cylindre primitif tangent intérieurement avec les cylindres primitifs des deux roues intermédiaires.

On peut également prévoir que les rayons des cylindres primitifs des pignons auxiliaires soient égaux aux rayons des cylindres primitifs des pignons intermédiaires ; cependant, il est également possible de prévoir que ces rayons soient différents.

On peut avantageusement prévoir que l'axe du pignon intermédiaire d'une voie cinématique et l'axe du pignon auxiliaire de l'autre voie cinématique définissent un plan perpendiculaire à l'axe de l'arbre portant les deux vis sans fin ; cependant, il est également possible de prévoir que le plan défini par ces deux axes de pignons soit oblique par rapport à l'axe de l'arbre portant les deux vis sans fin.

Selon une utilisation préférée de la transmission selon l'invention, l'arbre menant est celui qui porte les deux vis sans fin, la transmission étant un réducteur de vitesse ; les deux vis sans fin de l'arbre menant sont disposées de façon adjacente sur ledit arbre, l'arbre menant étant supporté par deux paliers disposés du même côté de l'ensemble formé par les deux vis sans fin adjacentes ; l'arbre menant est entraîné par un moteur électrique et l'arbre mené commande une timonerie d'essuie-glaces de véhicule automobile.

Pour mieux faire comprendre l'objet de l'invention, on va en décrire maintenant à titre d'exemples purement illustratifs et non limitatifs plusieurs modes de réalisation représentés sur le dessin annexé.

Sur ce dessin :

les figures 1a et 1b représentent, schématiquement, la disposition des réactions pour une transmission selon l'invention comportant une roue de sortie en couronne, la figure 1a montrant la projection des réactions dans le plan passant par l'axe de la double vis et perpendiculaire aux axes de pignons, alors que la figure 1b montre la projection des réactions dans le plan passant par l'axe de la double vis et perpendiculaire au plan de projection précédent ;

la figure 2 représente, en plan, un moto-réducteur dans lequel la partie réducteur est constituée d'une transmission selon l'invention, la roue de sortie étant tangente extérieurement aux roues intermédiaires, les pignons auxiliaire et intermédiaire ayant les mêmes cylindres primitifs ;

la figure 3 représente une coupe selon III-III de la figure 2 ;

la figure 4 représente un autre mode de réalisation du moyen de déplacement transversal des pignons intermédiaires pour une transmission du type de celle représentée sur la figure 2 ;

la figure 5 représente une variante du réducteur de la figure 2, variante dans laquelle la roue de sortie est une couronne tangente intérieurement avec les roues intermédiaires ;

la figure 6 est une coupe partielle selon VI-VI de la figure 5 ;

la figure 7 représente le schéma d'une variante de réalisation de la transmission selon l'invention dans laquelle le plan des axes d'un pignon auxiliaire et du pignon intermédiaire de l'autre voie cinématique n'est pas perpendiculaire à l'axe de la double vis ;

la figure 8 représente, schématiquement, une autre variante de réalisation de la transmission selon l'invention dans laquelle les diamètres des pignons auxiliaires sont différents des diamètres des pignons intermédiaires ;

la figure 9 représente, schématiquement, une autre variante de la transmission selon l'invention dans laquelle on utilise à la fois les deux caractéristiques des variantes représentées sur les figures 7 et 8.

En se référant aux figures 1a et 1b, on voit que l'on a désigné par 1 l'arbre menant porteur de vis d'une transmission selon l'invention. L'arbre 1 est maintenu par deux paliers 2a, 2b dans lesquels il est libre de coulisser. L'arbre 1 porte deux vis hélicoïdales 3a, 3b de pas égaux et opposés à deux filets. Les deux vis 3a, 3b sont disposées dans la zone de l'arbre 1 qui est à l'extérieur de la zone comprise entre les paliers 2a et 2b. On a représenté en traits mixtes les engrenages de la transmission. La transmission comporte deux pignons intermédiaires 4a, 4b, présentant une denture hélicoïdale compatible avec les vis 3a, 3b ; les deux pignons intermédiaires 4a, 4b ont le même cylindre primitif ; ils ont des axes parallèles et perpendiculaires à l'axe de l'arbre 1 ; ils engrènent respectivement avec les vis 3a, 3b. Les pignons intermédiaires 4a, 4b sont solidaires chacun d'une roue intermédiaire à denture droite désignée par 5a, 5b respectivement, les roues 5a, 5b ayant respectivement le même axe que les pignons intermédiaires 4a, 4b. La transmission comporte, en outre, deux pignons auxiliaires 6a, 6b ; les pignons 6a, 6b ont des dentures hélicoïdales et ont les mêmes cylindres primitifs que les pignons intermédiaires 4a, 4b ; le pignon 6a engrène avec la vis 3a et avec le pignon intermédiaire 4b ; le pignon 6b engrène avec la vis 3b et avec le pignon intermédiaire 4a ; les axes des pignons auxiliaires 6a et 6b sont parallèles aux axes des pignons intermédiaires 4a et 4b ; les plans des axes des pignons 4a et 6a, d'une part, et 4b et 6b, d'autre part, sont perpendiculaires à l'axe de l'arbre 1. Les roues intermédiaires 5a et 5b engrènent avec une roue de sortie 7 constituée par une couronne dentée intérieurement, les roues intermédiaires 5a, 5b étant tangentes intérieurement par rapport à la roue de sortie 7. Sur la figure 1a, on a désigné par $R'_1$, $R'_2$, $R'_3$, $R'_4$ les projections, sur le plan passant par l'axe de l'arbre 1 et perpendiculaire aux axes des pignons 4a, 4b, 6a, 6b, des réactions s'exerçant sur l'arbre 1 à partir respectivement des pignons intermédiaires 4a, 4b et des pignons auxiliaires 6a, 6b. Sur la figure 1b, on a désigné par $R''_1$, $R''_2$, $R''_3$, $R''_4$ les projections des mêmes réactions sur le plan passant par l'axe de l'arbre 1 et parallèle aux axes des pignons 4a, 4b, 6a, 6b. Bien que cela ne soit pas représenté sur le dessin, les pignons intermédiaires 4a, 4b, sont portés par un même moyen de déplacement transversal, qui leur permet de se déplacer librement parallèlement à leurs axes, ces déplacements étant de valeurs égales et de même sens. La roue de sortie 7 est solidaire de l'arbre de sortie 8 de la transmission, cet arbre étant disposé selon l'axe de la roue de sortie 7.

La transmission, qui vient d'être décrite, fait apparaître deux voies cinématiques doubles : la première voie cinématique fait intervenir les pignons 4a et 6b ; la deuxième voie cinématique fait intervenir les pignons 4b et 6a. Si la puissance transmise par l'une des deux voies cinématiques tend à être supérieure à la puissance transmise par l'autre, les composantes parallèles à l'axe des pignons des forces $R''_1$ et $R''_4$, d'une part, et $R''_2$ et $R''_3$, d'autre part, deviennent inégales et la résultante de ces composantes n'est pas nulle ; une résultante de réaction s'exerce, en conséquence, sur l'ensemble formé par les deux pignons intermédiaires 4a, 4b, parallèlement aux axes de ces pignons, ce qui provoque un déplacement transversal de l'ensemble des deux pignons dans le sens qui tend à annuler ladite résultante. On voit donc qu'en raison de la position flottante des pignons 4a et 4b, il y a auto-équilibrage des puissances transmises par les deux voies cinématiques.

Par ailleurs, dans une même voie cinématique, la puissance transmise de l'arbre 1 à l'arbre 8 se répartit de façon égale entre les chemins qui passent par le pignon intermédiaire 4a ou 4b et par le pignon auxiliaire 6b ou 6a ; en effet, si un déséquilibre tend à se produire, les forces $R'_1$ et $R'_4$ ou $R'_2$ et $R'_3$ deviennent inégales et la résultante de ces forces sur l'axe de l'arbre 1 devient non nulle, ce qui entraîne un déplacement longitudinal de l'arbre 1 dans le sens qui tend à annuler cette résultante. On voit donc que le libre positionnement longitudinal de l'arbre 1 permet d'assurer l'auto-équilibrage des puissances transmises par les deux chemins d'une même voie cinématique.

En d'autres termes, le dispositif, qui vient d'être décrit, assure de façon automatique l'équi-répartition de la puissance transmise à partir de la double vis 3a, 3b par les quatre pignons 4a, 4b, 6a, 6b. Il en résulte que les composantes $R'_1$, $R'_2$, $R'_3$, $R'_4$, d'une part, et $R''_1$, $R''_2$, $R''_3$, $R''_4$, d'autre part, sont égales et symétriques par rapport à l'axe de l'arbre 1. Ceci entraîne que ces composantes s'annulent deux à deux et que l'arbre 1 ne subit pas de moment de flexion, de sorte qu'il n'existe pas de réaction sur les paliers 2a et 2b de l'arbre 1. On constate que, dans ces conditions, le rendement d'une telle transmission est exceptionnellement élevé et peut atteindre 80 %. Cette transmission constitue donc un progrès technique important par rapport à celle qui était décrite dans le brevet français 2 372 998. L'absence de réaction sur les paliers 2a et 2b permet de réduire la dimension de ceux-ci ; l'absence de moment de flexion dans l'arbre 1 permet de réduire le dimensionnement de la double vis pour une même puissance transmise.

Sur la figure 2, on a représenté un autre mode de réalisation de la transmission des figures 1a et 1b, ladite transmission étant, cette fois, disposée dans un carter et reliée à un moteur électrique pour constituer un moto-réducteur utilisable, par exemple, pour l'entraînement des essuie-glaces d'un véhicule automobile. Les éléments qui ont été décrits pour les figures 1a et 1b et qui portent des références comprises entre 1 et 6 inclusivement, se retrouvent à l'identique dans la réalisation de la figure 2, où elles ont été désignées par des références augmentées de 10 par rapport à celles des éléments correspondants des figures 1a et 1b. L'arbre 11 est solidaire du rotor 19 d'un moteur électrique. L'ensemble du moteur électrique et de la transmission est disposé dans un carter désigné par 20 dans son ensemble, ledit carter portant intérieurement les inducteurs 19a du moteur électrique. Les vis 13a, 13b coopèrent chacune avec un pignon intermédiaire 14a, 14b et un pignon auxiliaire 16a, 16b. Les deux pignons intermédiaires 14a, 14b sont solidaires de deux roues intermédiaires 15a, 15b à denture droite, qui engrènent avec une roue de sortie 17 à denture droite ; la roue de sortie 17 est tangente extérieurement aux roues intermédiaires 15a, 15b et elle est solidaire de l'arbre mené de la transmission (non représenté sur le dessin).

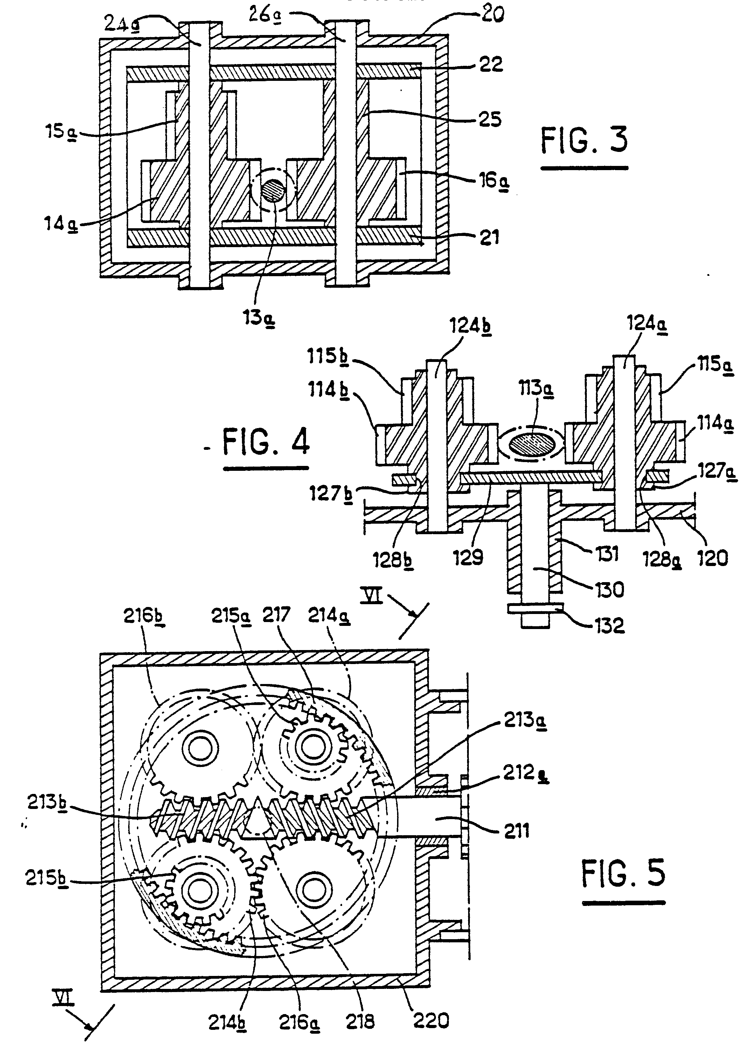

Dans cette réalisation, les quatre pignons 14a, 14b, 16a, sont montés entre deux platines 21 et 22 ; le pignon 16b est porté par la platine 21 au droit d'une échancrure de la platine 22. Les platines 21 et 22 sont parallèles entre elles et perpendiculaires aux axes des pignons 14a, 14b, 16a, 16b ; ces axes, désignés respectivement par 24a, 24b, 26a, 26b, sont portés par le carter 20, comme il est bien visible sur la figure 3. Les platines 21 et 22 coulissent librement sur ces axes. Le pignon auxiliaire 16a est prolongé par un manchon-entretoise 25, de façon à avoir la même hauteur totale que l'ensemble formé par un pignon intermédiaire et la roue intermédiaire qui lui est associée. Les deux platines 21 et 22 s'appuient de part et d'autre de l'ensemble des pignons et sont reliées entre elles par un moyen de solidarisation non représenté sur le dessin. L'ensemble des deux platines 21 et 22 et des pignons qu'elles enserrent constituent donc une cage, qui est librement déplaçable sur les axes de coulissement transversal constitués par les quatre axes 24a, 24b, 26a, 26b des quatre pignons de la transmission. L'auto-équilibrage de la transmission de puissance par les quatre pignons s'effectue donc, dans cette variante, en raison du montage flottant de la cage 21, 22 et du libre positionnement axial de l'arbre 11. Les avantages obtenus avec ce mode de réalisation sont les mêmes que ceux qui ont été indiqués pour la réalisation des figures 1a et 1b.

En se référant à la figure 4, on voit que l'on a représenté un autre mode de réalisation du moyen de déplacement transversal des pignons intermédiaires de la transmission de la figure 2. Pour éviter toute confusion, les éléments de la figure 2 que l'on retrouve sur la figure 4 ont été désignés par des chiffres de référence augmentés de 100 par rapport à ceux qui désignent les éléments correspondants sur la figure 2. La figure 4 est une coupe passant par les axes des pignons intermédiaires de la transmission de la figure 2. Dans cette variante de réalisation, les pignons auxiliaires de la transmission ne sont pas susceptibles de déplacement transversal. Les pignons intermédiaires 114a, 114b sont montés sur des axes 124a, 124b respectivement, lesdits axes étant tenus à leur base par le carter 120 de la transmission. Au-dessous de chaque pignon intermédiaire 114a, 114b est disposé un manchon prolongateur 127a, 127b, où l'on a pratiqué une gorge 128a, 128b respectivement. Une platine 129 relie les deux pignons intermédiaires 114a, 114b et enserre chaque pignon au niveau de la gorge 128a, 128b, les pignons pouvant tourillonner librement par rapport à la platine 129, mais étant solidaires de cette platine en raison de la coopération de la platine avec les gorges 128a, 128b. La platine 129 est solidaire d'un axe de coulissement 130, susceptible de se déplacer dans un manchon 131 solidaire du carter 120, l'axe dudit manchon étant perpendiculaire à l'axe de la double vis de la transmission. Le déplacement transversal de la platine 129 est limité, d'une part, par son appui sur une extrémité du manchon 131 et, d'autre part, au moyen d'une rondelle 132 disposée à la base de l'axe de coulissement 130, à l'extérieur du manchon 131.

Dans cette variante de la réalisation de la figure 2, seuls les pignons intermédiaires sont susceptibles d'un déplacement transversal, mais on retrouve néanmoins tous les avantages de la

**0 143 820**

réalisation représentée sur les figures 2 et 3.

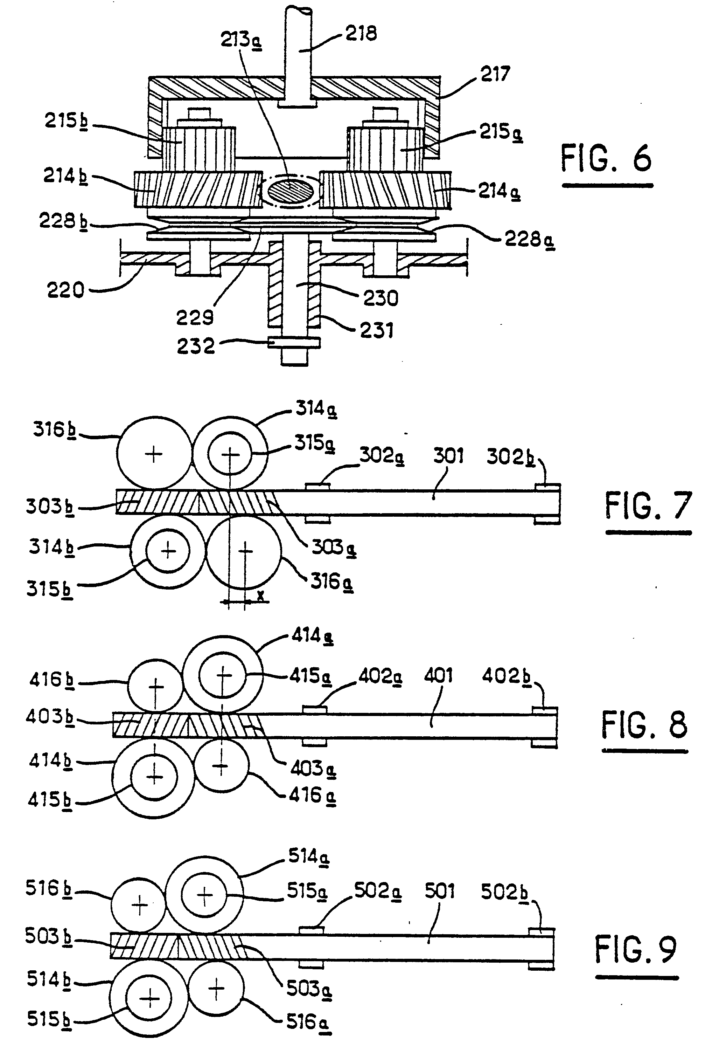

Sur les figures 5 et 6, on a représenté un autre mode de réalisation de la transmission selon l'invention. Dans ce mode de réalisation, on retrouve à l'identique la double vis, les pignons intermédiaires et auxiliaires et les roues intermédiaires, qui sont représentés sur la figure 2. Ces éléments communs ont été désignés par des chiffres de référence qui sont égaux à ceux des éléments correspondants de la réalisation de la figure 2 augmentés de 200. On retrouve donc, dans un carter 220, un arbre 211, qui porte deux vis hélicoïdales de pas opposés 213a, 213b ; avec ces deux vis coopèrent, d'une part, deux pignons intermédiaires 214a, 214b et, d'autre part, deux pignons auxiliaires 216a, 216b, les positions relatives de ces pignons étant identiques à celles de la réalisation de la figure 2. Les pignons intermédiaires 214a, 214b portent respectivement des roues intermédiaires à denture droite 215a, 215b, qui engrènent avec une roue de sortie 217 ; mais, dans cette réalisation, la roue de sortie 217 a la forme d'une couronne, qui engrène intérieurement avec les deux roues intermédiaires 215a, 215b, comme il a déjà été décrit pour la réalisation des figures 1a et 1b. L'arbre de sortie solidaire de la roue 217 a été désigné par 218 et il est disposé selon l'axe de la roue à denture droite 217. Dans cette réalisation, les deux pignons auxiliaires 216a, 216b ne sont pas susceptibles de déplacement transversal ; seuls les pignons intermédiaires 214a, 214b peuvent subir une translation parallèlement à leur axe au moyen d'un arrangement qui est représenté sur la figure 6.

Chaque pignon intermédiaire 214a, 214b comporte à sa base une poulie 228a, 228b respectivement, les deux poulies coopérant avec un même galet 229, qui pénètre dans les gorges des deux poulies 228a, 228b. Le galet 229 comporte un axe 230, qui peut tourillonner librement à l'intérieur d'un manchon 231 du carter 220. L'axe 230 est susceptible de coulisser librement à l'intérieur du manchon 231, entre, d'une part, la position dans laquelle le galet 229 vient en appui contre une extrémité du manchon 231 et, d'autre part, la position dans laquelle une rondelle 232 solidaire de l'axe 230 vient en appui contre l'autre extrémité du manchon 231. Les pignons intermédiaires et les roues intermédiaires, dont ils sont solidaires, peuvent librement coulisser le long de leurs axes respectifs, le coulissement transversal maintenant néanmoins l'engrènement entre les roues intermédiaires 215a, 215b et la roue de sortie en couronne 217. Ce mode de réalisation présente les mêmes avantages que ceux précédemment décrits.

Enfin, sur les figures 7 à 9, on a représenté schématiquement trois autres variantes de réalisation de la transmission selon l'invention. Sur la figure 7, on voit que l'arbre 301 tourillonne dans deux paliers 302a, 302b et porte, dans la zone non comprise entre ces deux paliers, deux vis à pas égaux et opposés 303a, 303b. La transmission comporte deux pignons intermédiaires 314a, 314b solidaires de deux roues intermédiaires 315a, 315b et deux pignons auxiliaires 316a, 316b ; les quatre pignons 314a, 314b, 316a, 316b ont des cylindres primitifs de même diamètre et comportent une denture hélicoïdale. Les deux roues intermédiaires 315a, 315b ont le même diamètre. La différence par rapport à toutes les réalisations précédemment décrites est que le plan des axes des deux pignons, qui coopèrent avec une même vis, n'est pas perpendiculaire à l'axe de l'arbre 301 mais légèrement oblique. Dans ce cas, les réactions des pignons sur les vis ne sont pas exactement symétriques, mais ces réactions restent néanmoins modérées si le décalage X qui crée l'obliquité reste faible. Bien entendu, pour respecter les possibilités d'engrènement, X doit être égal au pas apparent des pignons ou multiple de ce pas apparent. Sur la figure 7, la roue de sortie engrénant avec les roues intermédiaires 315a et 315b n'a pas été représentée pour plus de clarté.

Sur la figure 8, on a représenté une réalisation dans laquelle les diamètres des cylindres primitifs des pignons auxiliaires sont différents des diamètres des cylindres primitifs des pignons intermédiaires ; néanmoins, les axes des pignons coopérant avec une même vis sont dans un plan perpendiculaire à l'axe de la double vis. Ce mode de réalisation permet de choisir des pignons auxiliaires plus petits que les pignons intermédiaires pour réduire l'encombrement de la transmission. Etant donné que les éléments représentés sur la figure 8 sont similaires à ceux que l'on a représentés sur la figure 7, on a désigné les éléments de la figure 8 par des chiffres de référence qui sont augmentés de 100 par rapport à ceux des éléments correspondants de la figure 7.

La variante de la figure 9 correspond à une combinaison des variantes des figures 7 et 8. Etant donné que les éléments représentés sur cette figure 9 sont analogues à ceux représentés sur la figure 8, on a désigné sur le dessin les éléments de la figure 9 par des chiffres de référence augmentés de 200 par rapport à ceux adoptés pour les éléments correspondants de la figure 7. Dans cette réalisation, les pignons auxiliaires 516a, 516b ont un diamètre primitif inférieur au diamètre primitif des pignons intermédiaires 514a, 514b avec lesquels ils engrènent, et les plans des axes des pignons 514a et 516a, d'une part, et 514b et 516b, d'autre part, sont légèrement obliques par rapport à l'axe de l'arbre 501. Cette disposition permet de réduire l'encombrement de la transmission au même titre que la disposition de la figure 8, mais elle permet également de faire en sorte que le plan tangent aux pignons 514b et 516b situés à l'extrémité de l'arbre 501 soit perpendiculaire à l'axe de cet arbre, ce qui peut être un élément favorable pour la réduction d'encombrement de la transmission. Bien entendu, dans cette réalisation, comme dans celle de la figure 7, les réactions sur les paliers 502a, 502b ne sont pas totalement supprimées.

Il est bien entendu que les modes de réalisation ci-dessus décrits ne sont aucunement limitatifs et pourront donner lieu à toutes modifications désirables, sans sortir pour cela du cadre de l'invention ; en particulier, les deux roues intermédiaires peuvent engréner extérieurement sur une roue dentée située entre elles et centrée sur la ligne des axes des roues intermédiaires, cette roue dentée étant solidaire d'un pignon qui engrène avec la roue de sortie dont l'axe constitue l'arbre de sortie.

## Revendications

1. Transmission à engrenages à deux voies cinématiques comprenant un arbre menant (1, 11, 211, 301, 401, 501) portant deux vis sans fin (3a, 3b ; 13a, 13b ; 213a, 213b ; 303a, 303b ; 403a, 403b ; 503a, 503b), à filets inclinés en sens opposés et un arbre mené (8, 218), chacune des deux voies cinématiques comprenant un pignon intermédiaire à denture hélicoïdale (4a, 4b ; 14a, 14b ; 214a, 214b ; 314a, 314b ; 414a, 414b ; 514a, 514b) engrenant respectivement chacun avec l'une des deux vis sans fin sur des côtés opposés, les deux pignons intermédiaires étant solidaires chacun d'une roue dentée intermédiaire (5a, 5b ; 15a, 15b ; 115a, 115b ; 215a, 215b ; 315a, 315b ; 415a, 415b ; 515a, 515b) de même axe, ces deux roues dentées intermédiaires engrenant avec une même roue (7, 17, 217) calée sur l'arbre mené (8, 218), les axes des pignons intermédiaires sont sensiblement parallèles à l'axe de l'arbre mené caractérisée en ce que chaque voie cinématique est double et comprend en outre un pignon auxiliaire (6a, 6b ; 16a, 16b ; 216a, 216b ; 316a, 316b ; 416a, 416b ; 516a, 516b) engrenant avec celle des deux vis sans fin qui ne coopère pas avec le pignon intermédiaire (4a, 4b) de la même voie cinématique, ledit pignon auxiliaire (6a,b) de chaque voie cinématique engrenant avec le pignon intermédiaire (4a,b) de cette même voie cinématique et les pignons intermédiaires des deux voies cinématiques sont portés par un moyen de déplacement (21, 22 ; 129, 130) les laissant libres pendant le fonctionnement de se déplacer parallèlement à leurs axes, tandis que l'arbre (1, 11, 211, 301, 401, 501) portant les deux vis sans fin est monté libre en déplacement en sens longitudinal.

2. Transmission selon la revendication 1 caractérisée par le fait que les pas des deux vis sans fin sont égaux et de sens contraires, les rayons des cylindres primitifs des deux pignons intermédiaires étant égaux, de même que ceux des deux roues intermédiaires.

3. Transmission selon l'une quelconque des revendications 1 et 2 caractérisée par le fait que les deux pignons intermédiaires sont reliés entre eux par un moyen (21, 22 ; 129, 130 ; 229, 230) susceptible de se déplacer en translation parallèlement aux axes des deux pignons intermédiaires.

4. Transmission selon la revendication 3 caractérisée par le fait que le moyen de liaison des deux pignons intermédiaires est une platine (21, 22 ; 129) par rapport à laquelle les deux pignons intermédiaires peuvent tourner librement.

5. Transmission selon la revendication 3 caractérisée par le fait que le moyen de liaison des deux pignons, intermédiaires est un galet (229) fou en rotation, qui coopère avec un chemin de roulement correspondant (228a, 228b) pratiqué sur chacun des deux pignons intermédiaires (214a, 214b).

6. Transmission selon l'une des revendications 3 ou 4 caractérisée par le fait que le moyen de liaison (21, 22) des deux pignons intermédiaires (14a, 14b) relie également les deux pignons auxiliaires (16a, 16b) qui peuvent tourner librement par rapport à ce moyen de liaison.

7. Transmission selon l'une des revendications 1 à 6 caractérisée par le fait que la roue (17), qui engrène avec les deux roues intermédiaires (15a, 15b), a son cylindre primitif tangent extérieurement aux cylindres primitifs des deux roues intermédiaires.

8. Transmission selon l'une des revendications 1 à 6 caractérisée par le fait que la roue (7, 217), qui engrène avec les deux roues intermédiaires (5a, 5b ; 215a, 215b), a son cylindre primitif tangent intérieurement avec les cylindres primitifs des deux roues intermédiaires.

9. Transmission selon la revendication 2 caractérisée par le fait que les rayons des cylindres primitifs des pignons auxiliaires (6a, 6b ; 16a, 16b ; 216a, 216b ; 316a, 316b) sont égaux aux rayons des cylindres primitifs des pignons intermédiaires (4a, 4b ; 14a, 14b ; 214a, 214 b ; 314a, 314b).

10. Transmission selon la revendication 2 caractérisée par le fait que les rayons des cylindres primitifs des pignons auxiliaires (416a, 416b ; 516a, 516b) sont différents des rayons des cylindres primitifs des pignons intermédiaires (414a, 414b ; 514a, 514b).

11. Transmission selon l'une des revendications 1 à 10 caractérisée par le fait que l'axe (24a, 24b) du pignon intermédiaire d'une voie cinématique et l'axe (26a, 26b) du pignon auxiliaire de l'autre voie cinématique définissent un plan perpendiculaire à l'axe de l'arbre (11) portant les deux vis sans fin.

12. Transmission selon l'une des revendications 1 à 10 caractérisée par le fait que l'axe du pignon intermédiaire (314a, 314b ; 514a, 514b) d'une voie cinématique et l'axe du pignon auxiliaire (316a, 316b ; 516a, 516b) de l'autre voie cinématique définissent un plan oblique par rapport à l'axe de l'arbre (301, 501) portant les deux vis sans fin.

## Claims

1. A gear transmission which has two kinematic paths and comprises one driving shaft (1, 11, 211, 301, 401, 501) carrying two worms (3a, 3b ; 13a, 13b ; 213a, 213b ; 303a, 303b ; 403a, 403b ; 503a, 503b) of opposite pitch, and one driven shaft (8, 218), each of the two kinematic paths comprising one intermediate pinion having helicoidal teeth (4a, 4b ; 14a, 14b ; 214a, 214b ; 314a, 314b ; 414a, 414b ; 514a, 514b) meshing with one of the two worms and on opposite sides respectively, the two intermediate pinions being integral each coaxially with one intermediate gearwheel (5a, 5b ; 15a, 15b ; 115a, 115b ; 215a, 215b ; 315a, 315b ; 415a, 415b ; 515a, 515b) these two intermediate gearwheels meshing with one and the same gearwheel (7, 17, 217) keyed onto the driven shaft (8, 218) and the axes of the intermediate pinions being substantially parallel with the axis of the driven shaft, characterized in that each kinematic path is double and comprises in addition one auxiliary pinion (6a, 6b ; 16a, 16b ; 216a, 216b ; 316a, 316b ; 416a, 416b ; 516a, 516b) meshing with that one of the two worms which is not cooperating with the intermediate pinion (4a, 4b) of the same kinematic path, the said auxiliary pinion (6a, 6b) of each kinematic path meshing with the intermediate pinion (4a, 4b) of this same kinematic path, and the intermediate pinions of the two kinematic paths are carried by a means of displacement (21, 22 ; 129, 130) which leaves them free during operation to be displaced in parallel with their axes, whilst the shaft (1, 11, 211, 301, 401, 501) carrying the two worms is mounted to be free in displacement longitudinally.

2. A transmission as in Claim 1, characterized by the fact that the pitches of the two worms are equal and opposite, the radii of the pitch cylinders of the two intermediate pinions being equal, likewise those of the two intermediate gearwheels.

3. A transmission as in either of the Claims 1 and 2, characterized by the fact that the two intermediate pinions are connected together by a means (21, 22 ; 129, 130 ; 229, 230) capable of being displaced in translation in parallel with the axes of the two intermediate pinions.

4. A transmission as in Claim 3, characterized by the fact that the means of connection of the two intermediate pinions is a plate (21, 22 ; 129) with respect to which the two intermediate pinions can turn freely.

5. A transmission as in Claim 3, characterized by the fact that the means of connection of the two intermediate pinions is a freely rotating disc (229) which cooperates with a corresponding rollway (228a, 228b) machined in each of the two intermediate pinions (214a, 214b).

6. A transmission as in one of the Claims 3 or 4, characterized by the fact that the means of connection (21, 22) of the two intermediate pinions (14a, 14b) likewise connects the two auxiliary pinions (16a, 16b) which can turn freely with respect to this means of connection.

7. A transmission as in one of the Claims 1 to 6, characterized by the fact that the gearwheel (17) which meshes with the two intermediate gearwheels (15a, 15b) has its pitch cylinder tangential externally to the pitch cylinders of the two intermediate gearwheels.

8. A transmission as in one of the Claims 1 to 6, characterized by the fact that the gearwheel (7, 217) which meshes with the two intermediate gearwheels (5a, 5b ; 215a, 215b) has its pitch cylinder tangential internally to the pitch cylinders of the two intermediate gearwheels.

9. A transmission as in Claim 2, characterized by the fact that the radii of the pitch cylinders of the auxiliary pinions (6a, 6b ; 16a, 16b ; 216a, 216b ; 316a, 316b) are equal to the radii of the pitch cylinders of the intermediate pinions (4a, 4b ; 14a, 14b ; 214a, 214b ; 314a, 314b).

10. A transmission as in Claim 2, characterized by the fact that the radii of the pitch cylinders of the auxiliary pinions (416a, 416b ; 516a, 516b) differ from the radii of the pitch cylinders of the intermediate pinions (414a, 414b ; 514a, 514b).

11. A transmission as in one of the Claims 1 to 10, characterized by the fact that the axis (24a, 24b) of the intermediate pinion of one kinematic path and the axis (26a, 26b) of the auxiliary pinion of the other kinematic path define a plane perpendicular to the axis of the shaft (11) carrying the two worms.

12. A transmission as in one of the Claims 1 to 10, characterized by the fact that the axis of the intermediate pinion (314a, 314b ; 514a, 514b) of one kinematic path and the axis of the auxiliary pinion (316a, 316b ; 516a, 516b) of the other kinematic path define a plane oblique with respect to the axis of the shaft (301, 501) carrying the two worms.

**Patentansprüche**

1. Zahnradgetriebe mit zwei kinematischen Bahnen, mit einer treibenden Welle (1, 11, 211, 301, 401, 501), die zwei endlose Schnecken (3a, 3b ; 13a, 13b ; 213a, 213b ; 303a, 303b ; 403a, 403b ; 503a, 503b) aufweist, deren Gänge in entgegengesetztem Sinne geneigt sind und mit einer getriebenen Welle (8, 218), wobei jede der beiden kinematischen Bahnen ein Zwischenritzel mit Spiralverzahnung (4a, 4b ; 14a, 14b ; 214a, 214b ; 314a, 314b ; 414a, 414b ; 514a, 514b) aufweist, die jeweils in eine der beiden endlosen Schnecken an gegenüberliegenden Seiten eingreift, die beiden Zwischenritzel jeweils fest mit einem Zwischenzahnrad (5a, 5b ; 15a, 15b ; 115a, 115b ; 215a, 215b ; 315a, 315b ; 415a, 415b ; 515a, 515b) mit gleicher Achse verbunden sind, die beiden Zwischenzahnräder in ein gleiches Rad (7, 17, 217) eingreifen, das auf der angetriebenen Welle (8, 218) verkeilt ist, und die Achsen der Zwischenritzel im wesentlichen parallel zur Achse der angetriebenen Welle liegen, dadurch gekennzeichnet, dass jede kinematische Bahn doppelt vorhanden ist und ferner ein Hilfsritzel (6a, 6b ; 16a, 16b ; 216a, 216b ; 316a, 316b ; 416a, 416b ; 516a, 516b) umfasst, das in Eingriff mit jener der beiden endlosen Schnecken steht, die nicht mit dem Zwischenritzel der gleichen kinematischen Bahn zusammenwirkt, das Hilfsritzel (6a, 6b) jeder kinematischen Bahn in Eingriff mit dem Zwischenritzel (4a, 4b) dieser gleichen kinematischen Bahn steht und die Zwischenritzel der beiden kinematischen Bahnen durch eine Verschiebevorrichtung (21, 22 ; 129, 130) getragen werden, die sie frei beweglich lässt während der Durchführung ihrer Parallelverschiebung gegenüber ihren Achsen, während die Welle (1, 11, 211, 301, 401, 501), die die beiden endlosen Schnecken trägt, in Längsrichtung frei verschiebbar befestigt ist.

2. Zahnradgetriebe nach Anspruch 1, dadurch gekennzeichnet, dass die Steigung der beiden endlosen Schnecken gleich und gegenläufig ausgebildet ist, und dass die Radien der Teilkreise der beiden Zwischenritzel gleich gross sind, und desgleichen jene der beiden Zwischenräder.

3. Zahnradgetriebe nach einem der Ansprüche 1 und 2, dadurch gekennzeichnet, dass die beiden Zwischenritzel miteinander mittels einer Vorrichtung (21, 22 ; 129, 130 ; 229, 230) verbunden sind, die sich in einer Translationsbewegung parallel zu den Achsen der beiden Zwischenritzel verschieben kann.

4. Zahnradgetriebe nach Anspruch 3, dadurch gekennzeichnet, dass die Verbindungsvorrichtung der beiden Zwischenritzel aus einer Platine (21, 22 ; 129) besteht, der gegenüber die beiden Zwischenritzel frei drehbar sind.

5. Zahnradgetriebe nach Anspruch 3, dadurch gekennzeichnet, dass die Verbindungsvorrichtung der beiden Zwischenritzel eine lose drehbare Rolle (229) ist, die mit einer zugeordneten Laufbahn (228a, 228b) zusammenwirkt, die auf jedem der beiden Zwischenritzel (214a, 214b) angebracht ist.

6. Zahnradgetriebe nach einem der Ansprüche 3 oder 4, dadurch gekennzeichnet, dass die Verbindungsvorrichtung (21, 22) der beiden Zwischenritzel (14a, 14b) gleichermassen die beiden Hilfsritzel (16a, 16b) verbindet, die sich gegenüber dieser Verbindungsvorrichtung frei drehen können.

7. Zahnradgetriebe nach einem der Ansprüche 1 bis 6, dadurch gekennzeichnet, dass das Rad (17), das in Eingriff mit den beiden Zwischenzahnrädern (15a, 15b) steht, mit seinem Teilkreis aussen die Teilkreise der beiden Zwischenzahnräder tangiert.

8. Zahnradgetriebe nach einem der Ansprüche 1 bis 6, dadurch gekennzeichnet, dass das Rad (7, 217), das mit den beiden Zwischenzahnrädern (5a, 5b ; 215a, 215b) in Eingriff steht, mit seinem Teilkreis (Zylinder) innen die Teilkreise (Zylinder) der beiden Zwischenzahnräder tangiert.

9. Zahnradgetriebe nach Anspruch 2, dadurch gekennzeichnet, dass die Radien der Teilkreise (Zylinder) der Hilfsritzel (6a, 6b ; 16a, 16b ; 216a, 216b ; 316a, 316b) gleich gross wie die Radien der Teilkreise (Zylinder) der Zwischenritzel (4a, 4b ; 14a, 14b ; 214a, 214b ; 314a, 314b) sind.

10. Zahnradgetriebe nach Anspruch 2, dadurch gekennzeichnet, dass die Radien der Teilkreise (Zylinder) der Hilfsritzel (416a, 416b ; 516a, 516b) gegenüber den Radien der Teilkreise (Zylinder) der Zwischenritzel (414a, 414b ; 514a, 514b) unterschiedlich gross sind.

11. Zahnradgetriebe nach einem der Ansprüche 1 bis 10, dadurch gekennzeichnet, dass die Achse (24a, 24b) des Zwischenritzels einer kinematischen Bahn und die Achse (26a, 26b) des Hilfsritzels der anderen kinematischen Bahn eine Ebene bilden, die senkrecht zur Achse der Welle (11) verläuft, die die beiden endlosen Schnecken trägt.

12. Zahnradgetriebe nach einem der Ansprüche 1 bis 10, dadurch gekennzeichnet, dass die Achse des Zwischenritzels (314a, 314b ; 514a, 514b) einer kinematischen Bahn und die Achse des Zwischenritzels (316a, 316b ; 516a, 516b) der anderen kinematischen Bahn eine Ebene bilden, die schräg gegenüber der Achse der Welle (301, 501) verläuft, die die beiden endlosen Schnecken trägt.

FIG. 1a

FIG. 1b

FIG. 2

FIG. 3

FIG. 4

FIG. 5

0 143 820

FIG. 6

FIG. 7

FIG. 8

FIG. 9

3